## Europäisches Patentamt
## European Patent Office
## Office européen des brevets

(19)

(11) Publication number: **0 071 673**
A2

# (12) EUROPEAN PATENT APPLICATION

(21) Application number: **81201183.1**

(22) Date of filing: **27.10.81**

(51) Int. Cl.³: **B 62 M 1/02,** B 62 M 1/10

(30) Priority: **07.08.81 IT 6810081**

(43) Date of publication of application: **16.02.83**
**Bulletin 83/7**

(84) Designated Contracting States: **AT BE CH DE FR GB LI LU NL SE**

(71) Applicant: **Parisi, Antonio, Corso Peschiera, 351, I-10141 Turin (IT)**

(72) Inventor: **Parisi, Antonio, Corso Peschiera, 351, I-10141 Turin (IT)**

(74) Representative: **Robba, Eugenio, Studio "INTERPATENT" via Caboto 35, I-10129 Turin (IT)**

(54) Connecting system between the pedals and the driving sprocket of a velocipede, watercraft or the like.

㊼ A connecting system between pedals and driving sprocket of a velocipede, watercraft or the like, comprising:

- a mass-holding lever, having one end connected to the pedal journal and bearing a mass at its opposite, free end;

- pedal crank means coupled to the driving sprocket by means of spokes and slots allowing a relative sliding between the spokes and slots;

- a bracket integral with the driving sprocket, projecting outwardly form said sprocket and having a tie rod hinged at its free end;

- a tie rod connected with its opposite end to a point close to the journaling axis of the pedals on the massholding lever, eccentric with respect to said axis;

the mass-holding lever having an amplitude of swinging around the journaling axis, determined and limited by the length of the adjustable tie rod; the eccentricity of the hinging point of said tie rod with respect to the axis of the pedals causing a torque acting on the mass-holding lever in a clockwise direction, with consequent partial lifting of said lever due to the relative sliding of spokes, pedal cranks and driving sprocket upon an effort being exerted on the pedals by the user; such lifting helping the movement of said lever toward its top dead center, after which the lever in its fall will impart its own momentum to the motion of the main driving sprocket.

0071673

-1-

Connecting system between the pedals and the driving
sprocket of a velocipede, watercraft or the like

This invention is related to a connecting system
between the pedals and the driving sprocket of a velocipede, watercraft or the like, and adapted to reduce the
alternating effort exerted upon the pedals by the user
of the vehicle.

As is known, in the field of both racing and touring
bicycles, as well as of other kinds of velocipedes, the
user's force on the pedals of the vehicle is transferred
to the driving sprocket by means of the conventional
means comprising a driving sprocket and a driven sprocket,
connected by a flat link chain.

For each kind of course the correct ratio should be
used; the higher the ratio, the easier should be the
course, while for courses going uphill the ratio should
be considerably lower.

A full turn of the driving sprocket (a $360^{\circ}$ rotation)
will cause the driven sprocket to move the vehicle over
a different number of meters.

The object of this invention is to provide means,
suitable for all kinds of velocipedes, i.e. both racing
and touring velocipedes, watercrafts and the like, to
allow the user to exert a smoother effort on the pedals,
which amounts in practice to a reduction of said effort.

The system according to the invention substantially comprises:

- a mass-holding lever, having a length greater than the length of the pedal cra:  :s, rotatably connected at one end to the pedal hub and bearing at its opposite, free end, a mass of .a predetermined value, of about 200 to 300 grams; said mass being fixed to said opposite end by means of a threaded coupling or by means of quick-clamping means, to allow quick replacement of the mass by another of a different value, depending on the user's wish;

- a system of pedal cranks rigidly coupled with the pedals at their free ends and coupled to the driving sprocket at their opposite ends by means of spokes integral with the pedal cranks, the spokes being engaged in slots in said driving sprocket, said slots having a length allowing the spokes of the pedal cranks to slide with respect to said slots in the driving sprocket;

- a connecting bracket, integral with the driving sprocket, extending in a plane parallel to the plane of said driving sprocket and projecting from said driving sprocket of a predetermined length, the distance from the free end of said connecting bracket and the center of rotation of said driving sprocket being about as long as one of the pedal cranks, i.e. 170-180 mm; a tie rod being hinged at the free end of said connecting bracket;

- a tie rod, hinged at one end to the connecting bracket and hinged at its opposite end to a point of the mass-holding lever, said point being close to the swiveling axis of the pedals, but eccentric with respect to said axis;

- said mass-holding lever having a swinging elongation around the swiveling axis of the pedals of about $90^c$-$100^c$

-3-

in both directions (clockwise and counterclockwise); said elongation of swinging being predetermined and limited by the length of the tie rod (adjustable); the eccentricity of the hinging point of said tie rod with respect to the axis of rotation of the pedals defining the arm of the torque acting on the mass-holding lever upon a force on the pedal exerted by the user, with consequent, partial rising of said lever in a clockwise direction; said torque and its action being made possible by the relative sliding between the spokes of the pedal arms and the driving sprocket, said sliding being determined and limited by the length of said slots in the driving sprocket.

According to a further feature of this invention in one alternative embodiment, a twofold system of mass-holding levers is provided, each on one side of the velocipede and directed in opposite directions, i.e. one for each pedal crank, the embodiment being particularly suitable for touring velocipedes.

The invention will now be particularly described with reference to the attached drawings, given by way of non-restricting examples, and concerning a preferred embodiment of the invention, with reference to a racing bicycle, and in which;

- Fig. 1 is a side elevation view of the system according to the invention, comprising a mass-holding lever, pedal cranks, crank spokes, driving sprocket, connecting lever and hinged tie rod, the system being shown in its rest position, at the start of the stroke between spokes and slots;

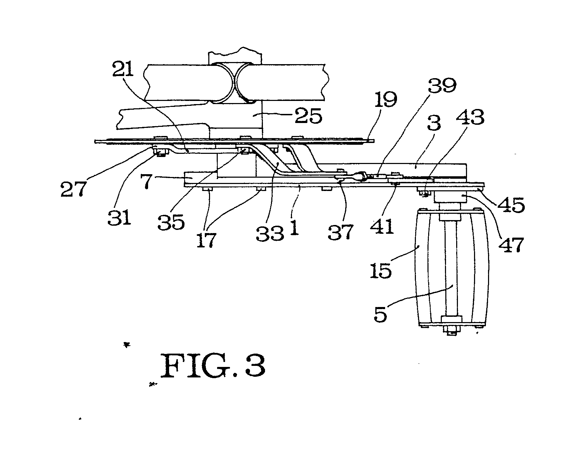

- Fig. 2 is a side elevation view, similar to Fig. 1, of the system of the invention, in the position reached at the end of an effort exerted by the user upon the pedals, at the end of the stroke between the spokes and the slots;

- Fig. 3 is a top view of the system of Fig. 1.

As it appears in the figures, and as mentioned above, the connecting system between the pedals and the driving sprocket of a velocipede, watercraft or the like, according to this invention, essentially comprises several members, connected to each other and to the driving and driven parts of the velocipede: the action upon said members by the user being suitably transmitted to the several parts.

More detailedly, the system substantially comprises a mass-holding lever 1, longer than each of the pedal cranks 3, rotatably supported at one end on the pedal hub 5 and bearing at its opposite, free end a mass 7. Said mass is comprised between 150 and 350 grams, more preferably between 200 and 300 grams. In the example shown said mass is 250 grams (racing bicycle).

Lever 1 is preferably of pressed steel of about 0.8 mm thickness, having suitable webs 9 to absorb transversal stresses.

Lever 1 is of the first kind and has two spokes 11 and 13 connecting the power end, bearing mass 7, with the resistance end, which is hinged in 5 to pedal hub 5.

Lever 1 is hinged to the pedal hub 5 by means of a self-lubricating, sintered bushing received in a sleeve borne at the end of the lever.

The means of assembly and disassembly of mass 7 to and from the lever are threaded fasteners such as bolts and nuts, though it is obvious that other means may be used for such assembly.

More particularly, for a quick assembly and release of the mass, sprung pins are more suitable, which are received in corresponding slots provided in the lever.

Such sprung means are particularly suitable for racing bicycles, where the mass on the mass-holding lever 1 may have to be changed.

The pedal cranks 3 are connected to the driving sprocket 19 by means of spokes 21, generally three or five, (three in the example shown) which project radially from the central hub 23 around which the pedal cranks turn with respect to the frame 25 of the velocipede, and which are fitted at their ends in curved slots 29, of limited extension, which are provided on the driving sprocket 19.

The ends 27 of the spokes 21 of the pedal cranks 3 are fitted in said slots 29 by means of suitable threaded devices 31, such as bolts and nuts.

Such coupling is more properly a sliding fit rather than a tight fit, i.e. a coupling between the spokes 21 and the driving sprocket 19 such that a relative sliding between such parts is allowed.

In racing bicycles, where both the pedal cranks and the driving sprocket (be it simple, double or triple) are made from light alloy, the connection between the ends 27 of the spokes 21 of the pedal cranks and the driving sprocket 19 is made by means of suitable threaded bushes (not shown), embedded in the die-cast spokes 21; similarly, corresponding pins (also not shown) are received in suitable seats provided in the driving sprocket 19 to this purpose.

In the embodiment described as an example, the extension of said slots is about 3 mm, so that, during a full turn of $360^{\circ}$, the extent of sliding of the pedal cranks with respect to the driving sprocket is of about 6 mm overall.

A lever or bracket 33 is mounted at 35 on the driving sprocket 19 in a position at about $60^{\circ}$ from the pedal crank 3 in counterclockwise direction, projecting outwardly from the driving sprocket. Bracket 33 projects to a distance from the hub 23 approximately equal to the length of a pedal crank, i.e. about 175 mm, and is displaced laterally so that, even when driven in rotation with the driving sprocket 19, it does not interfere with the derailleur (not shown) usually provided in racing bicycles.

Obviously, said bracket 33 should not interfere with cranks 3, with the mass-holding lever 1, nor with other possible moving members.

The free end 37 of bracket 33 is connected, by means of a tie rod 39, adjustably hinged in 41, with the resistance end of the mass-holding lever 1, at a point 43 eccentric with respect to the pedal hub 5, on the sleeve of a bushing 47, which is preferably projection-welded on the mass-holding lever 1 and is coaxial to the pedal hub 5.

In the example shown, tie rod 39 is a rod of about 3 mm thickness, such that passage between crank 3 and mass-holding lever 1 is allowed.

As mentioned above, the centrifugal mass 7 is between 150 and 350 grams, preferably between 200 and 300 grams, and is placed at a distance from the pedal hub 5 (the center of rotation), which is greater than the length of crank 3.

The fastening of tie rod 39 in 43 is quite close to the pedal hub 5; the fastening of tie rod 39 to bracket 33 in 37 is at a distance of about 175 mm from the hub 23 of the driving sprocket 19 on the bicycle frame.

The mass-holding lever 1 should now be considered in its rest position, i.e. with mass 7 near the bottom point of its trajectory.

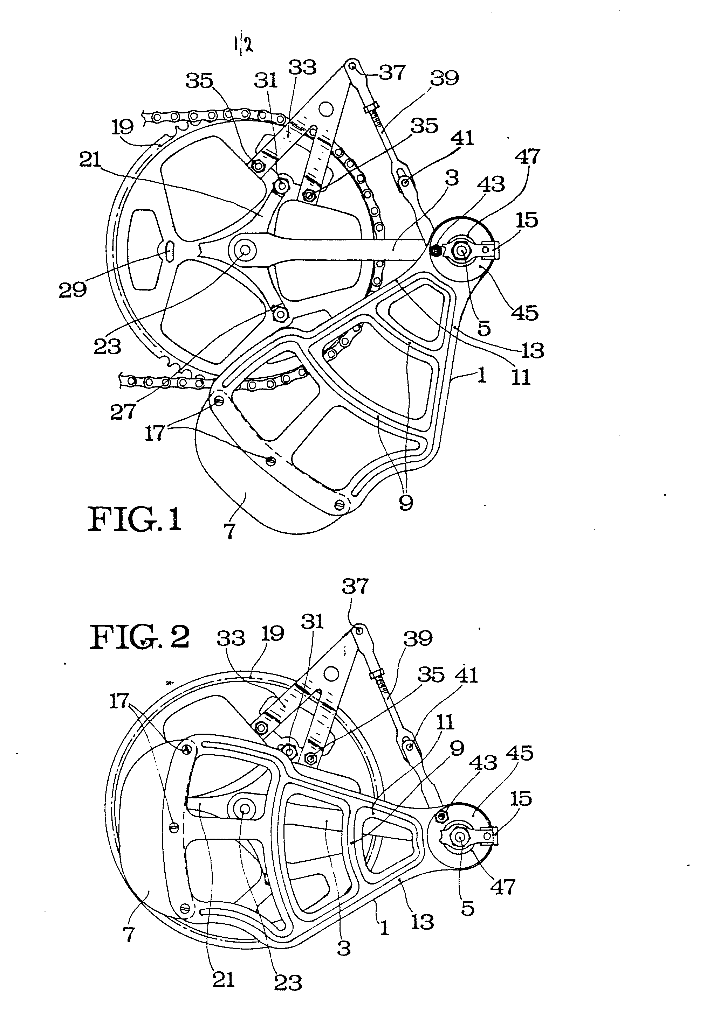

Fig. 1 shows an intermediate position, useful for understanding the following.

The user, riding the bicycle, exerts on pedal 15 a downward effort; the pedal acts on the crank 3, which, due to the sliding connection of spokes 21 with driving sprocket 19, shifts angularly in some degree with respect to it; said effort also puts under tension the tie rod 39, which, due to its eccentric fastening 43 with respect to the pedal hub 5 to the resistance end of the mass-holding lever 1, causes the latter to rise, or shift angularly, proportionally to the above-mentioned relative sliding of cranks 3 with respect to driving sprocket 19, said lever 1 being brought closer to its top dead center; as the rider's effort is continued, the top dead center is reached and overcome, and the mass-holding lever 1 will fall down by gravity, shifting angularly in the degree allowed by the connection of tie rod 39 with bracket 33 and sleeve 45. Said downfall, through an angle of about $90°-100°$, applies a considerable force to the driving sprocket 19 in the direction of travel.

During travel, said forward fall of the mass-holding lever 1, brought close to its top dead center by the effort exerted by the user on the cranks, is converted in a smooth movement that is transmitted to the driving sprocket as an increment of thrust. Based on road tests that have been made, such increment of thrust is believed to be around 10%.

In the above-described embodiment, the system of levers acting on mass 7 causes a displacement of said mass with a force ratio of about 1:10.

The overall weight of the device is of around 500 to 600 grams.

It should be understood that the invention is not limited to the embodiment described and shown, but rather that numerous changes and modifications may be brought to it within the scope of the invention.

CLAIMS:-

1.  A connecting system between the pedals and the driving sprocket of a velocipede, watercraft or the like, characterized in that it substantially compr.:es:

- a mass-holding lever, having a length greater than the length of the pedal cranks, rotatably connected at one end to the pedal hub and bearing at its opposite, free end, a mass of a predetermined value, of about 200 to 300 grams; said mass being fixed to said opposite end by means of a threaded coupling or by means of quick-clamping means, to allow quick replacement of the mass by another of a different value, depending on the user's wish;

- a system of pedal cranks rigidly coupled with the pedals at their free ends and coupled to the driving sprocket at their opposite ends by means of spokes integral with the pedal cranks, the spokes being engaged in slots in said driving sprocket, said slots having a length allowing the spokes of the pedal cranks to slide with respect to said slots in the driving sprocket;

- a connecting bracket integral with the driving sprocket, extending in a plane parallel to the plane of said driving sprocket and projecting from said driving sprocket of a predetermined length, the distance from the free end of said connecting bracket and the center of rotation of said driving sprocket being about as long as one of the pedal cranks, i.e. 170-180 mm; a tie rod being hinged at the free end of said connecting bracket;

- a tie rod, hinged at one end to the connecting bracket and hinged at its opposite end to a point of the mass-holding lever, said point being close to the swiveling axis of the pedals, but eccentric with respect to said axis;

- said mass-holding lever having a swinging elongation around the swiveling axis of the pedals of about $90^{\circ}$-$100^{\circ}$ in both directions (clockwise and counterclockwise); said elongation of swinging being predetermined and limited by the length of the tie rod (adjustable); the eccentricity of the hinging point of said tie rod with respect to the axis of rotation of the pedals defining the arm of the torque acting on the mass-holding lever upon a force on the pedal exerted by the user, with consequent, partial rising of said lever in a clockwise direction; said torque and its action being made possible by the relative sliding between the spokes of the pedal arms and the driving sprocket, said sliding being determined and limited by the length of said slots in the driving sprocket.

2. A connecting system between the pedals and the driving sprocket of a velocipede, watercraft or the like, according to claim 1, characterized in that the amplitude of a complete forward-and-back swing of the mass-holding lever around its pivot is adjustable within the range of $90^{\circ}$ to $100^{\circ}$.

3. A connecting system according to claim 1 and 2, characterized in that the centrifugal mass borne by the mass-holding lever is comprised between 200 and 300 grams and is preferably of 250 grams.

4. A connecting system according to the preceding claims, characterized in that the mass-holding lever is of cold-pressed steel, of around 0.8 mm thickness, having webs adapted to absorb transversal stresses, and has two spokes connecting its free end, which bears the mass, to the end hinged to the pedal.

5. A connecting system according to the preceding claims, characterized in that the mass is fitted to the mass-holding lever by threaded means such as bolts and nuts.

6. A connecting system according to the preceding claims and a variant of claim 5, characterized in that the mass is fitted to the mass-holding lever by quick-release fastening means, such as sprung pins engaged in slots provided on the lever, in order to allow the user to quickly assemble and release said mass on said lever when it is desired to replace said mass with another of a different value.

7. A connecting system according to the preceding claims, characterized in that the engagement slots of the spokes of the pedal cranks to the driving sprocket have an extent of about 3 mm.

8. A connecting system according to the preceding claims, characterized in that the bracket integral with the main driving sprocket projects from said sprocket by a length of 170 to 180 mm from the hub and is angularly shifted counterclockwise from the pedal crank by an angle of about $60°$.

9. A connecting system according to the preceding claims, characterized in that the hinging point of the tie rod connecting the free end of the bracket on the driving sprocket to the resistance end of the mass-holding lever is eccentric with respect to the pedal journal by an

-4-

amount such as to cause, due to the relative sliding of the pedal cranks with respect to the driving sprocket, a lifting of the mass-holding lever to about half its stroke.

10. A connecting system between the pedals and the driving sprocket of a velocipede according to a variant of claim 1 and according to claims 2 to 9, characterized in that, for touring bicycles or sufficiently rugged pedalling vehicles, two mass-holding levers are provided, one for each pedal crank, substantially opposite and acting similarly each on one side.

Everything as disclosed and shown and for the purposes specified.

FIG.1

FIG.2

0071673

0071673

FIG. 3